# EUROPEAN PATENT APPLICATION

(11) **EP 2 557 737 A1**
(43) Date of publication of application: **13.02.2013**
(21) Application number: 10851012.4
(22) Date of filing: 26.11.2010
(51) Int. Cl.: H04L 12/58

(54) **COMMUNICATION CLIENT AND METHOD FOR INITIATING COMMUNICATION SERVICE**

(30) Priority: 06.05.2010 CN 201010173384
(71) Applicant: ZTE Corporation, Shenzhen, Guangdong 518057 (CN)
(72) Inventor: SHE, Kun, Guangdong 518057 (CN)
(74) Representative: Novagraaf Technologies
(86) International application number: PCT/CN2010/079195
(87) International publication number: WO 2011/137643

(57) **Abstract**

The present invention discloses a communication client and a method for initiating a communication service. The communication client comprises a control module and multiple communication plug-ins, wherein each communication plug-in is configured to implement communication functionalities for a service type; and the control module comprises: a requesting module, configured to accept a user operation to generate a communication request corresponding to the operation, wherein the communication request comprises: a target contact and a selected communication service type; a first determination module, configured to determine a communication plug-in which achieves the selected communication service type of communication in the multiple communication plug-ins; and a calling module, configured to call the determined communication plug-in to initiate the selected communication service type of communication toward the target contact. The present invention reduces the operation complexity of the user using various communication services simultaneously and improves user experience.

## Description

### Field of the Invention

The present invention relates to the communication field, and in particular to a communication client and a method for initiating a communication service.

### Background of the Invention

Communication is the core function of mobile terminals. With the increase of the processing capability of mobile terminals and the development of mobile Internet technology, the mobile terminals can provide more and more communication modes for the users. Except conventional telephones, short messages and multimedia messages, there are other services such as instant messages (such as QQ, MSN, Fetion, etc.), email, VoIP, video share, etc.

The diversity of communication modes can provide more choices for the users, but at the same time it brings inconvenience to the users, since different communication services generally cannot communicate with each other. Especially when different communication services are provided by different operators, it is even more difficult to achieve intercommunication, for example, QQ, MSN and Fetion cannot communicate with each other

Accordingly, in order to use a plurality of communication services, the user needs to simultaneously install and run the corresponding client program of each service on the mobile terminal, and if the user uses these services simultaneously, then he needs to continuously switch between different service clients.

### Summary of the Invention

The present invention is to provide a communication client and a method for initiating a communication service so as to at least solve the above problems.

A communication client is provided according to one aspect of the present invention, which comprises a control module and multiple communication plug-ins, wherein each communication plug-in is configured to implement communication functionalities for a service type; and the control module comprises: a requesting module, configured to accept a user operation to generate a communication request corresponding to the operation, wherein the communication request comprises: a target contact and a selected communication service type; a first determination module, configured to determine a communication plug-in which achieves the selected communication service type of communication in the multiple communication plug-ins; and a calling module, configured to call the determined communication plug-in to initiate the communication of the selected communication service type toward the target contact.

The control module further comprises: an acquiring module, configured to control the multiple communication plug-ins to log into their own server to acquire contact information, wherein the contact information comprises: contact name and communication account; a grouping module, configured to put the communication accounts with the same contact name into the same group; and a first displaying module, configured to display the corresponding contact name of each group.

The requesting module comprises: a first selecting module, configured to accept a user operation of selecting a target contact name in the contact names displayed by the first displaying module; a second displaying module, configured to display a communication account in a corresponding group of the target contact name; a second selecting module, configured to accept a user operation of selecting a target communication account in the communication accounts displayed by the second displaying module; and a second determination module, configured to determine the selected communication service type to be a communication service type corresponding to the target communication account.

The requesting module further comprises: an inquiring module, configured to determine each corresponding communication plug-in of each communication account in the corresponding group of the target contact name, and to inquire communication modes which can be currently initiated via each communication plug-in; the second displaying module is further configured to display the communication mode; the second selecting module further configured to accept a user to select a communication mode to be initiated from the displayed communication modes; and the calling module is configured to call the determined communication plug-in to initiate the communication process of the selected communication service type via the communication mode which needs to be initiated toward the target contact.

The inquiring module inquires communication modes which can be currently initiated via each communication plug-in according to the online situation and/or service capability of each communication account.

The multiple communication plug-ins is achieved by a dynamic link library file.

The control module further comprises: a configuration file, configured to record information of the multiple communication plug-ins, wherein the information comprises at least one of the following: dynamic link library file path, achieved communication service type, and achieved service name.

Each communication plug-in of the multiple communication plug-ins is further configured to receive a communication request sent to the user, and to send a communication account of an initiator to a retrieval module; and the control module further comprises: the retrieval module, configured to retrieve the communication account of the initiator in the acquired contact information; and a third displaying module, configured to display the corresponding contact name in the group where the communication account of the initiator is located in the situation that the retrieval module retrieves the communication account of the initiator, and to display the communication account of the initiator in the situation that the retrieval module does not retrieve the communication account of the initiator.

A method for initiating a communication service is provided according to another aspect of the present invention, which comprises the following steps of: a communication client accepting a user operation to generate a communication request corresponding to the operation, wherein the communication request comprises: a target contact and a selected communication service type; determining a communication plug-in which achieves the communication process of the selected communication service type in multiple communication plug-ins contained in the communication client; and the communication client calling the determined communication plug-in to initiate the communication process of the selected communication service type toward the target contact.

Before the communication client accepting a user operation to generate a communication request corresponding to the operation, the method further comprises: the communication client controlling the multiple communication plug-ins to log into their own server to acquire contact information, wherein the contact information comprises: contact name and communication account; the communication client putting the communication accounts with the same contact name into the same group; and the communication client displaying the corresponding contact name of each group.

The communication client accepting a user operation to generate a communication request corresponding to the operation comprises: the communication client accepting a user operation of selecting a target contact name in the displayed contact names; the communication client displaying a communication account in a corresponding group of the target contact name; the communication client accepting a user operation of selecting a target communication account in the displayed communication accounts; and the communication client determining that the selected communication service type is a corresponding communication service type of the target communication account.

By the present invention, the control module in the communication client generates a corresponding communication request of a user operation, a corresponding communication plug-in of this communication request is determined in multiple communication plug-ins which are configured to achieve the communication process of different communication service types contained in the communication client, and finally the communication process is achieved by the determined communication plug-in. It solves the problem in the relevant art that the user needs to switch between different service clients when using different services simultaneously and thus it causes the user operation to be inconvenient. The present invention can achieve a plurality of types of communication services in one communication client, reduce the operation complexity when the user simultaneously uses various communication services, and improves user experience.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a block diagram of the structure of a communication client according to the embodiments of the present invention;
Fig. 2 is a block diagram of a preferred structure I of a communication client according to the embodiments of the present invention;
Fig. 3 is a block diagram of a preferred structure II of a communication client according to the embodiments of the present invention;
Fig. 4 is a block diagram of a preferred structure III of a communication client according to the embodiments of the present invention;
Fig. 5 is a block diagram of a preferred structure IV of a communication client according to the embodiments of the present invention;
Fig. 6 is a block diagram of a preferred structure V of a communication client according to the embodiments of the present invention;
Fig. 7 is a flow chart of a method for initiating a communication service according to the embodiments of the present invention;
Fig. 8 is a schematic diagram of the software architecture of a communication client according to embodiment 1 of the present invention;
Fig. 9 is a schematic diagram of the aggregation function of a contact account according to embodiment 2 of the present invention;
Fig. 10 is a schematic diagram of a dynamic communication menu according to embodiment 2 of the present invention;
Fig. 11 is a schematic diagram of the detailed software architecture of a communication client according to embodiment 3 of the present invention;
Fig. 12 is a flow chart of the startup of a communication client according to embodiment 3 of the present invention;
Fig. 13 is a schematic diagram of an algorithm of generating a dynamic communication menu according to embodiment 3 of the present invention; and
Fig. 14 is a flow chart of the identification of a communication initiator account according to embodiment 3 of the present invention.

### Detailed Description of the Embodiments

The embodiments of the present invention will be described hereinafter in detail in conjunction with the drawings thereof. It needs to note that the embodiments of the present application and the features in the embodiments can be combined with each other if there is no conflict.

In order to use communication services (such as QQ, MSN, Fetion, etc.) in the mobile terminal, the user needs to install the corresponding clients of these communication services respectively in the mobile terminal so as to achieve corresponding communication functions. The embodiments of the present invention provide a communication client to achieve a plurality of communication functions in one communication client.

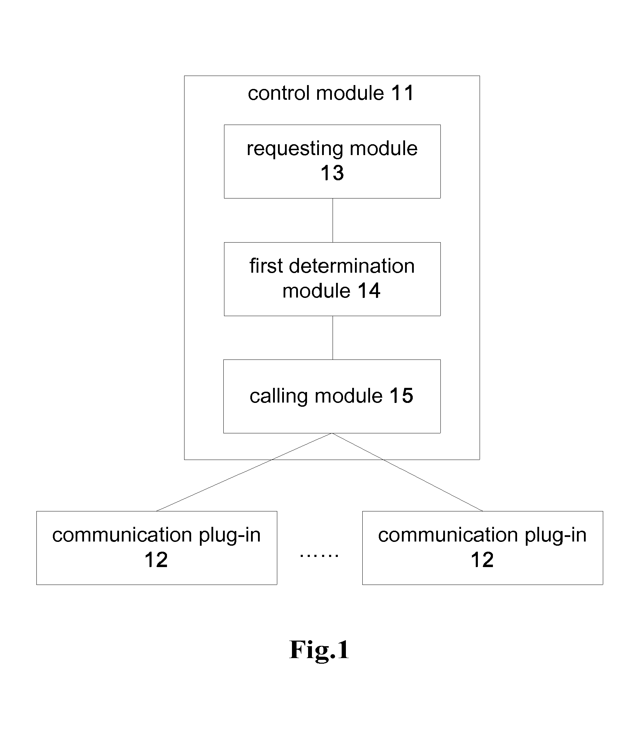

Fig. 1 is a block diagram of the structure of a communication client according to the embodiments of the present invention, and the communication client comprises a control module 11 and multiple communication plug-ins 12, wherein each communication plug-in 12 is configured to implement communication functionalities for a specific service type. The control module 11 comprises: a requesting module 13, configured to accept a user operation to generate a corresponding communication request of this operation, wherein the above communication request comprises a target contact and a selected communication service type; a first determination module 14, coupled to the requesting module 13 and configured to determine a communication plug-in 12 which achieves the communication process of the above selected communication service type in the multiple communication plug-ins 12; and a calling module 15, coupled to the communication plug-in 12 and configured to call the determined communication plug-in 12 to initiate the communication process of the above selected communication service type toward a target contact.

In the relevant art, the user needs to switch between different service clients when simultaneously using different services and thus it causes the user operation to be inconvenient, and reduces user experience. In the mobile terminal provided by the embodiments of the present invention, the requesting module 13 in the control module 11 of the communication client generates a communication request corresponding to the user operation, then the first determination module 14 in the control module 11 determines a communication plug-in 12 corresponding to this communication request in multiple communication plug-ins 12 which are configured to achieve the communication process of different communication service types, and finally, the calling module 15 calls the determined communication plug-in 12 to achieve the communication process. This embodiment can achieve various types of communication services in one communication client, which reduces the operation complexity when the user simultaneously uses various communication services, and improves user experience.

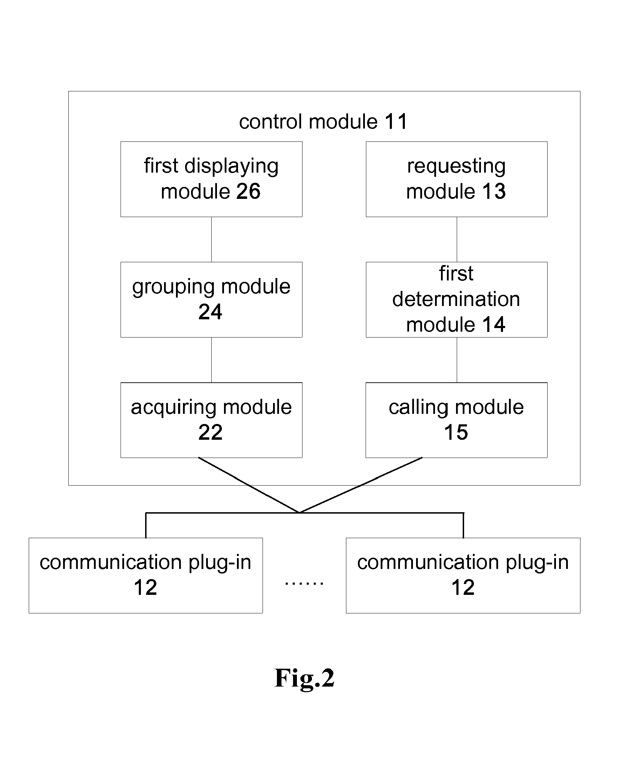

Fig. 2 is a block diagram of a preferred structure I of a communication client according to the embodiments of the present invention, and as shown in Fig. 2, preferably, the control module 11 can further comprise:
an acquiring module 22, coupled to the communication plug-in 12 and configured to control the multiple communication plug-ins 12 to log into their own server to acquire contact information, wherein the contact information comprises contact name and communication account;
a grouping module 24, coupled to the acquiring module 22 and configured to put the communication accounts with the same contact name into the same group; and
a first displaying module 26, coupled to the grouping module 24 and configured to display the contact names corresponding to each group.

By the way of the grouping module 24 putting the communication accounts with the same contact name into the same group and then the first displaying module 26 displaying the contact names corresponding to each group, the user can intuitively learn the contacts in each communication service, which improves user experience.

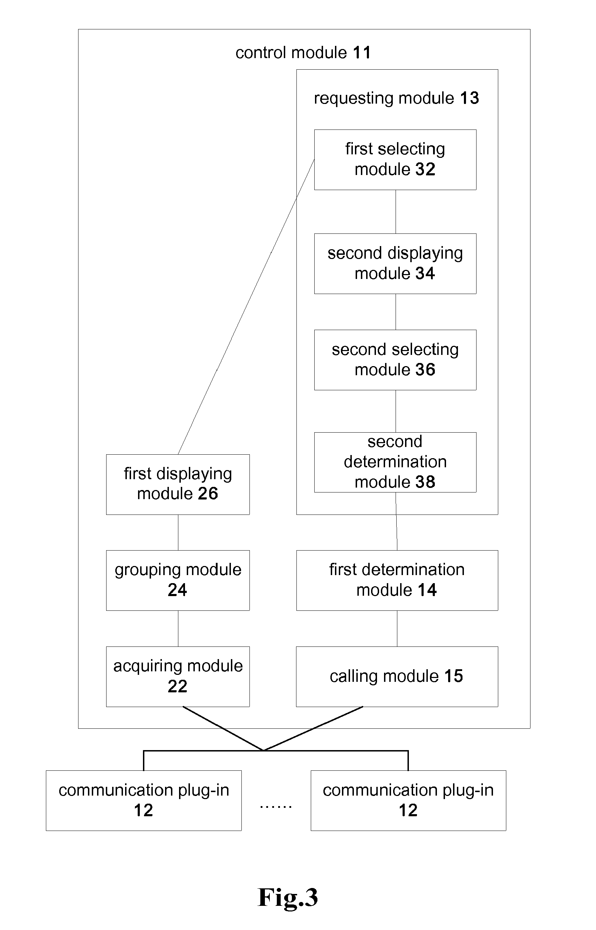

Fig. 3 is a block diagram of a preferred structure II of a communication client according to the embodiments of the present invention, and as shown in Fig. 3, preferably, the requesting module 13 comprises:
a first selecting module 32, coupled to the first displaying module 26 and configured to accept a user operation of selecting a target contact name from the contact names displayed by the first displaying module 26;
a second displaying module 34, coupled to the first selecting module 32 and configured to display a communication account in the group corresponding to the target contact name;
a second selecting module 36, coupled to the second displaying module 34 and configured to accept a user operation of selecting a target contact name from the contact names displayed by the second displaying module 34; and
a second determination module 38, coupled to the second selecting module 36 and configured to determine that the above selected communication service type is a communication service type corresponding to the target communication account.

By the above structure, the user only needs to select a contact, and then selects an account in the accounts displayed by the second displaying module 34 to complete the initiation of a communication, which greatly simplifies the operation procedure of initiating a communication. Moreover, the cooperation of the first selecting module 32 and the second displaying module 34 provides the contact account aggregation function, after the user selects a contact, the account of this contact used in each communication service is displayed to enable a large amount of and diverse contact accounts (such as contacts of QQ, MSN, Fetion, etc.) to be displayed aggregately, and the contact list will not be too long and will not appear disordered, and it is more convenient to search and browse the contacts.

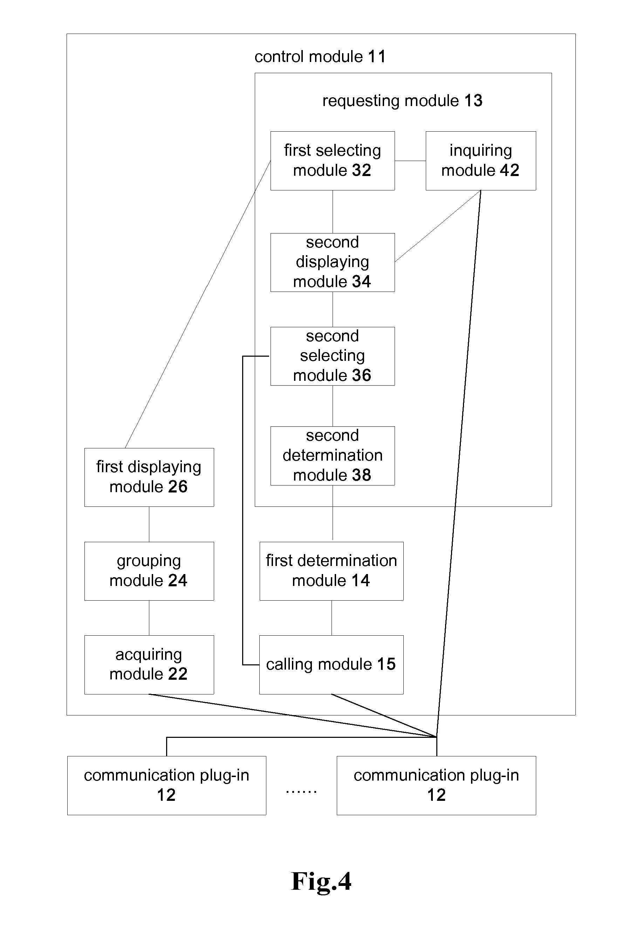

Fig. 4 is a block diagram of a preferred structure III of a communication client according to the embodiments of the present invention. As shown in Fig. 4, preferably, the requesting module 13 further comprises: an inquiring module 42, coupled to the first selecting module 32 and configured to determine each corresponding communication plug-in 12 of each communication account in the group corresponding to the target contact name and inquire communication modes which can be currently initiated via each communication plug-in 12; and the second displaying module 34 is further configured to display the above communication mode; the second selecting module 36 is further configured to accept a user operation of selecting a communication mode which needs to be initiated from the displayed communication modes; and the calling module 38 is further configured to call the determined communication plug-in 12 to initiate the communication process of the above selected communication service type toward the target contact via the communication mode which needs to be initiated.

In the relevant art, to aggregate all the communication modes of a contact or find a currently available communication mode of a contact, it may need to start up and view all the communication clients, which will cause inconvenience to the management of contact accounts. By the above structure, the user can clearly learn the communication modes which can be currently initiated by the contact, thus the user can select to initiate a communication via a certain mode by himself. Therefore, it can improve user experience.

Preferably, the inquiring module 42 inquires the communication modes which can be initiated currently via the each communication plug-in 12 according to the online situation and/or service capability of each communication account. Inquiring the communication modes which can be initiated currently according to the online situation can prevent the situation that a communication mode such as an instant message or voice call, which cannot be carried out offline, is initiated toward the contact when the contact is offline. It improves the validity of the communication service initiated by the user. Inquiring the communication modes which can be initiated currently according to the service capability can prevent the situation that the user message cannot be received since the target contact does not have the authority of communicating via the communication mode initiated by the user and prevent the loss of session.

Preferably, the multiple communication plug-ins 12 is achieved by a dynamic link library file. The dynamic link library file can provide several functions which can be called. These functions are referred to as export functions of the dynamic library. Only when the dynamic link library file is loaded into the process space where the main program is located via the API function provided by the operating system, the main program can call the functions in the dynamic library. The dynamic library file can be replaced with other dynamic library files which provide the same export function aggregation, while the main program still can run without being recompiled, and if the implementation of the export functions of a new dynamic library file is different from that of the replaced dynamic library file, then the functions of the whole computer programs will also change. Therefore, the communication plug-in 12 which is achieved by the dynamic link library file can support the extension of service functions and the communication plug-in 12 can be issued to the user independently, and the installation, upgrading and uninstallation of plug-ins can be carried out at any time without the recompilation or installation of the main program.

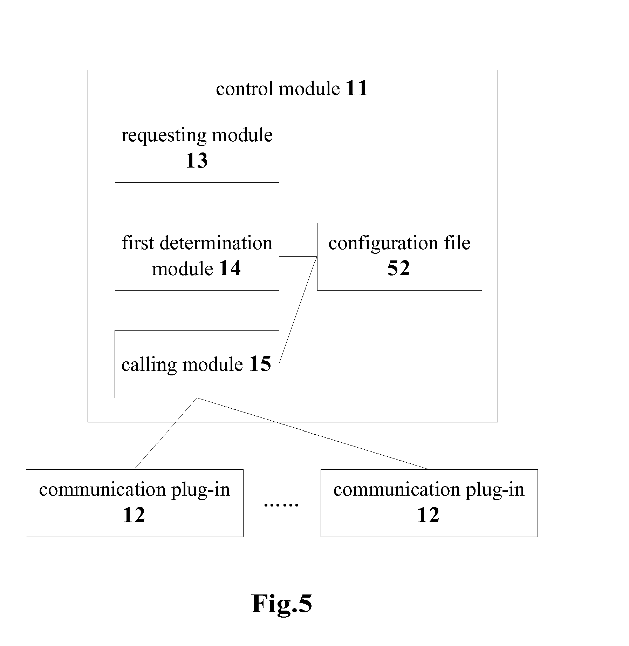

Fig. 5 is a block diagram of a preferred structure IV of a communication client according to the embodiments of the present invention, and as shown in Fig. 5, preferably, the control module 11 can further comprise: a configuration file 52, coupled to the first determination module 14 and the calling module 15 and configured to record the information of the multiple communication plug-ins 12, wherein the information comprises at least one of the following: dynamic link library file path, achieved communication service type, and achieved service name. Through the configuration file 52, the basis of determination and calling for the first determination module 14 and the calling module 15 can be provided, which facilitates the process of determining and calling. It needs to note that the first determination module 14 can also determine a corresponding communication plug-in by way of inquiring each communication plug-in 12 and other modes, which is not limited to the mode of determining a corresponding communication plug-in according to the contents of the configuration file 52.

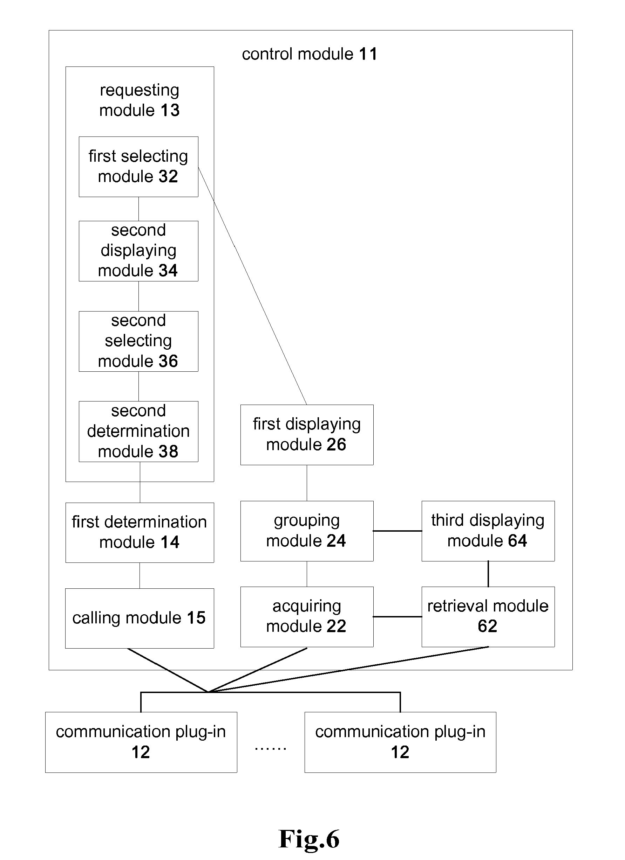

Fig. 6 is a block diagram of a preferred structure V of a communication client according to the embodiments of the present invention, and as shown in Fig. 6, preferably, each communication plug-in 12 in the multiple communication plug-ins 12 is further configured to receive a communication request sent to the user, and to send a communication account of an initiator to a retrieval module 62; and the control module 11 further comprises: the retrieval module 62, configured to retrieve the communication account of the initiator in the acquired contact information; and a third displaying module 64, configured to display the contact name corresponding to the group where the communication account of the initiator is located in the situation that the retrieval module 62 retrieves the communication account of the initiator, and to display the communication account of the initiator in the situation that the retrieval module 62 does not retrieve the communication account of the initiator

By way of the above structure, if the account of the communication initiator is identified, it can convert the account into a contact display name which can be more easily remembered by the user, which makes it easier for the users to use.

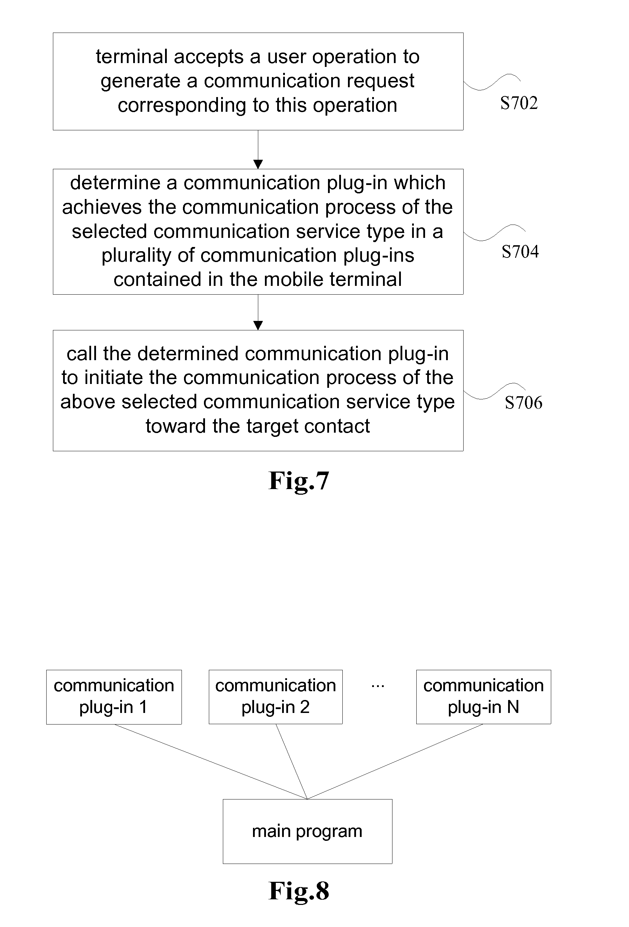

Fig. 7 is a flow chart of a method for initiating a communication service according to the embodiments of the present invention, and the method comprises the following steps.

Step S702: a mobile terminal accepts a user operation to generate a communication request corresponding to this operation, wherein the communication request comprises: a target contact and a selected communication service type.

Step S704: determine a communication plug-in which achieves the communication process of the selected communication service type in multiple communication plug-ins contained in the mobile terminal.

Step S706: call the determined communication plug-in to initiate the communication process of the above selected communication service type toward the target contact.

In the relevant art, the user needs to switch between different service clients when simultaneously using different services and it causes the user operation to be inconvenient and reduces user experience. In the method provided by the embodiments of the present invention, the communication client generates a communication request corresponding to a user operation, then determines a corresponding communication plug-in of this communication request in multiple communication plug-ins which achieve the communication process of different communication service types, and finally calls the determined communication plug-in to achieve the communication process. This embodiment can achieve various types of communication services in one communication client, which reduces the operation complexity when user simultaneously uses various communication services, and improves user experience.

Preferably, before Step S702, it further comprises: the mobile terminal controlling the multiple communication plug-ins to log into their own server to acquire contact information, wherein the contact information comprises: contact name and communication account; putting the communication accounts with the same contact name into the same group; and displaying the contact names corresponding to each group. By way of the above process, it enables the user to learn his contacts in each communication service intuitively, which improves user experience.

Preferably, Step S702 comprises: the mobile terminal accepting a user operation of selecting a target contact name in the displayed contact names; the mobile terminal displaying the communication account in the group corresponding to the target contact name; the mobile terminal accepting a user operation of selecting a target communication account in the displayed communication accounts; and determining the above selected communication service type to be the corresponding communication service type of the target communication account.

By way of the above process, the user only needs to select a contact, and then selects an account in the accounts displayed by the second displaying module 34 to complete the initiation of a communication, which greatly simplifies the operation procedure of initiating a communication. Moreover, this process provides the contact account aggregation function. After the user selects a contact, the account of this contact used in each communication service is displayed to enable a large amount of diverse contact accounts (such as contacts of QQ, MSN, Fetion, etc.) to be displayed aggregately, and the contact list will not be too long and will not appear to be disordered, and it is more convenient to search and browse the contacts.

Embodiments 1 to 3 will now be described in the following, which combine the technical solutions of the above several preferred embodiments.

### Embodiment 1

Fig. 8 is a schematic diagram of the software architecture of a communication client according to embodiment 1 of the present invention, and as shown in Fig. 8, the communication client comprises:
I: a main program which mainly provides a centralized contact account management function, and the centralized contact account management function refers to that the contact accounts of the user in all the communication services are stored and displayed centralized and operations such as adding, deleting, initiating a communication, etc. are performed via a unified user interface; and
II: several communication plug-ins, wherein each communication plug-in provides a communication service; the communication plug-ins can be installed, upgraded and uninstalled dynamically so as to update the functions of the unified communication client; in this case, "dynamic" refers to that the communication plug-ins can be issued to the user independently and the installation, upgrading and uninstallation of the plug-ins can be carried out at any time without the recompilation or installation of main program.

In order to achieve the dynamic installation, replacement and upgrading of communication plug-ins, the communication plug-ins can be provided in the form of dynamic link library files and the main program of the unified communication client is an executable file. The service procedure of same type of communication services (such as MSN and QQ) are very similar, therefore the definition of export functions of the dynamic link library which achieve them are the same, but the implementation is different. Thus, when the main program calls the Send function of the MSN dynamic link library, it sends an MSN message, and when calling the QQ dynamic link library, it sends a QQ message. For a communication service, only with its service type (such as instant message), it can be learnt which export functions the dynamic link library that achieves the communication service have.

The unified communication client records all the already installed communication plug-ins via a configuration file, and the information of each communication plug-in comprises: dynamic link library file path corresponding to a communication plug-in, achieved service name (such as MSN, QQ, etc.), and the communication service type (such as instant message). The main program can generate a supported communication service list by reading this configuration file. When the user wants to carry out a certain communication service, the main program loads the corresponding dynamic link library and then calls its export functions to complete the service function.

To install a communication plug-in, it needs to add a record in the configuration file. To delete a communication plug-in, besides deleting the corresponding dynamic link library, it further needs to delete corresponding record from the configuration file. To replace the dynamic link library file, since the main program does not need to be recompiled, the communication plug-ins can be upgraded dynamically.

### Embodiment 2

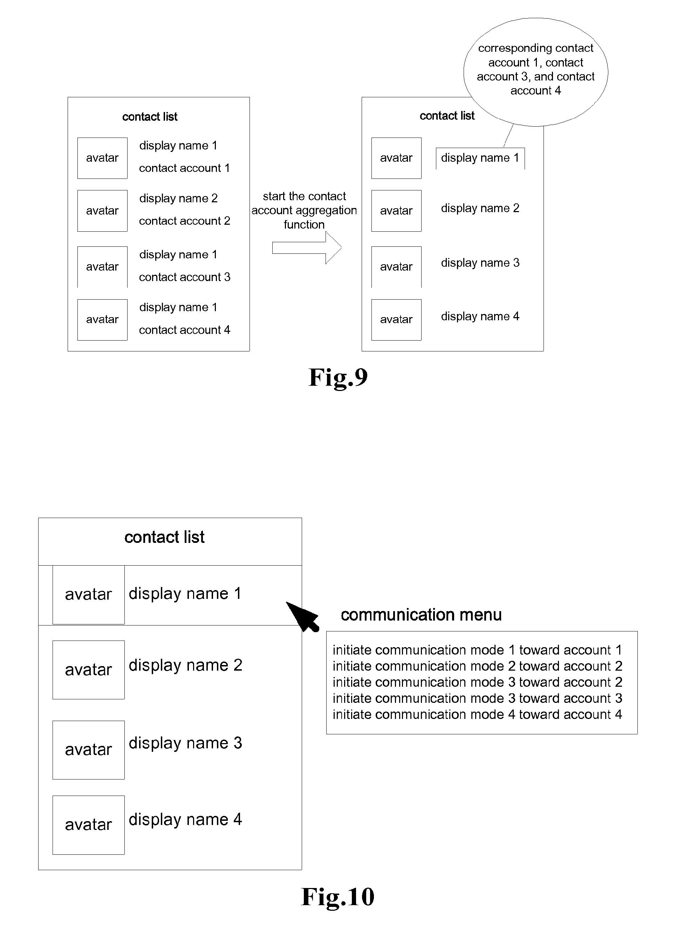

The centralized contact account management function provided by the main program in embodiment 1 is mainly achieved via the following means.
1. Regarding the user management interface aspect of contact account, a contact account aggregation function is provided. The so-called contact account aggregation refers to that the unified communication client automatically groups the contact accounts of which the display names are the same, and each group of accounts are viewed by the client as one contact record and displayed as a whole. And when the user initiates a communication, he only needs to designate an account group to be a target. The contact account aggregation function is that as shown in Fig. 9.
2. When the user is the communication initiator, the client provides an interaction mechanism of dynamic communication menu. When the user initiates a communication, he only needs to designate one account group as a target (for example, select a record displayed in the contact list, due to the account aggregation function, each contact record corresponds to one group of accounts), then the client automatically lists all possible communication modes of this contact according to the login situation and communication capability of the communication accounts of the user and the online situation and communication capability of all the contact accounts, and generates a dynamic communication menu. Fig. 10 shows an example of dynamic communication menu. The dynamic communication menu of each contact may be different.
3. When the user is a communication target, the client automatically associates the communication account of the communication initiator with one certain contact record. Therefore, the display name recorded by the contact can be displayed in the communication prompt interface.

### Embodiment 3

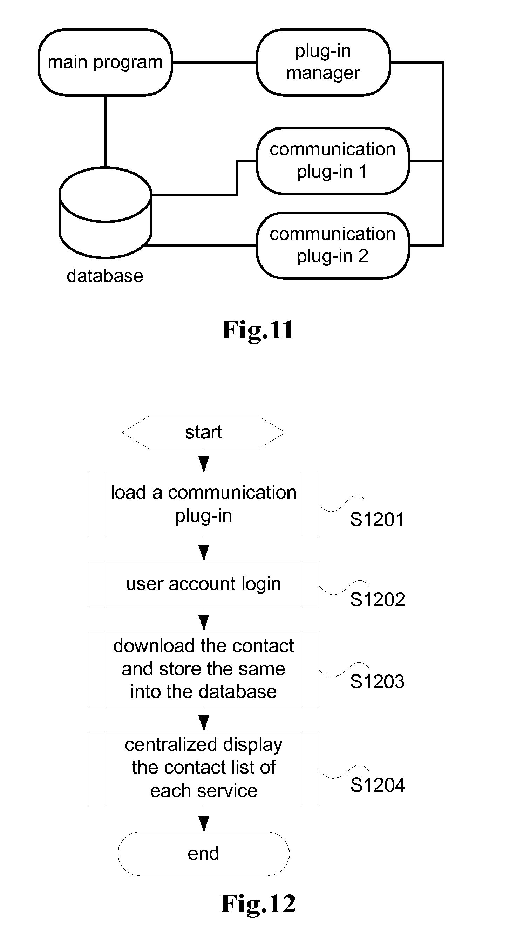

Fig. 11 is a schematic diagram of the software architecture of a communication client according to embodiment 3 of the present invention, and as shown in Fig. 11, the functions of each component are described as follows:
I. main program, which is the main body of the communication client and is responsible for achieving interaction with the user, i.e. display data (such as the contact list) to the user and accept user input.
II. plug-in manager, which is responsible for the dynamic loading of the communication plug-ins.
II. communication plug-ins, each of which achieves one service function, such as Fetion, MSN, etc.
IV database, which is responsible for storing the contacts of each service.

With the cooperation of the above components, the main steps of the communication client applicaiton, from startup to displaying all the service contacts, are shown in Fig. 12, which comprise:
Step S1201: the plug-in manager loads all the communication plug-ins;
Step S1202: the main program calls the login function of the communication plug-ins and completes the login of all the user accounts;
Step S1203: after the login of each communication plug-in is completed, the contact list is downloaded from the server and stored into the database; and
Step S 1204: the main program reads the contact list written by each communication plug-in from the database and displays it centralized, and performs account aggregation.

In Step S 1204, the contact accounts of each service are stored in one corresponding table of a relational database, and each account corresponds to one entry in the table. The contact attributes defined by different services are different, and therefore the entry attributes in different tables are also different. However, some attributes must be defined in all the services, such as display name, avatar, the service that the contact belongs to, etc. The unified communication client traverses all the tables in the database and displays the common attributes of each record in a list to centralized display the contacts.

When the user operates one certain record in the contact list, for example view detailed information, the unified communication client reads the "the service that the contact belongs to" attribute of this record, and then calls a corresponding communication plug-in to carry out the operation of viewing detailed information.

If the contact account aggregation function is started, after the unified communication client traverses all the contact account records, it will generate a virtual contact list, with the display name of each entry in the list being different and each entry mapping one or more contact account records with the same display name. The unified communication client displays this virtual contact list to achieve the contact account aggregation function.

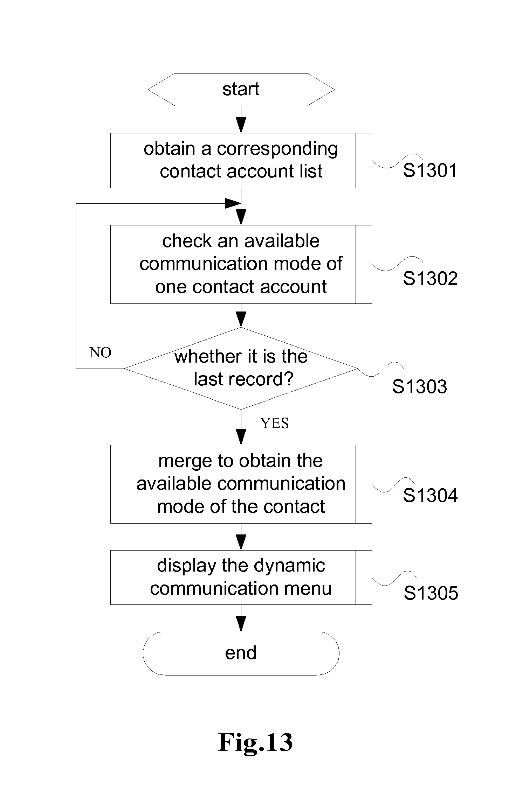

With the cooperation of the above components, the procedure of the user clicking one contact and the client automatically generating a dynamic communication menu is shown in Fig. 13, which comprises:
Step S1301: the main program checks the virtual contact list and obtains the contact account records corresponding to this contact;
Step S1302: the main program inquires a corresponding communication plug-in of the communication operations that can be carried out on a contact account according to "the service that the contact belongs to" attributes of this contact account via the plug-in manager;
Step S1303: the main program successively checks the available communication modes of all the contact accounts;
Step S1304: the main program merges the availabe communication modes of all the accounts to generate a set of availabe communication operations of the contact; and
Step S1305: the main program generates a dynamic communication menu according to the set of available communication operations of the contact.

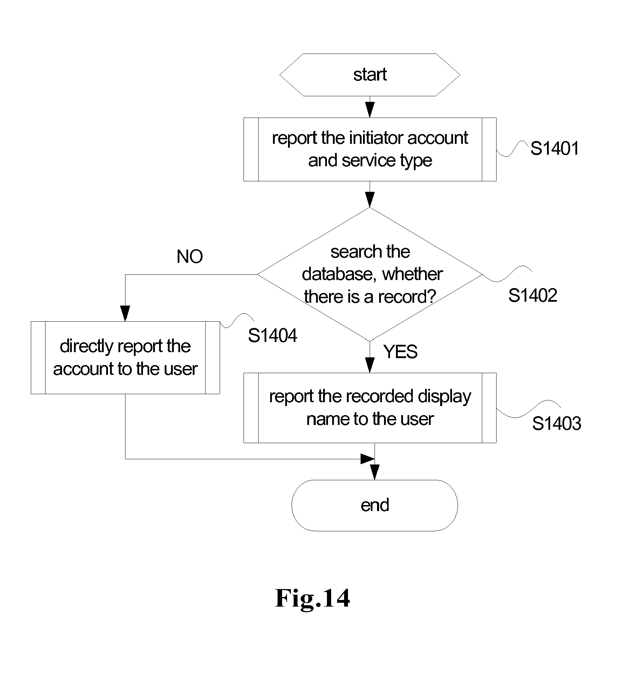

With the cooperation of the above components, the steps of achieving the identification of communication initiator account are shown in Fig. 14, wherein:
Step S 1401: after having received a communication request, the communication plug-in reports the account of the communication initiator and the communication service type to the main program via the plug-in manager;
Step S1402: the main program retrieves all the contacts of this service in the database using the account of the initiator;
Step S1403: if a record is found, then report the display name in the record to the user when prompting the user; and
Step S1404: if no record is found, then it indicates that the initiator is not a contact of the user and directly displays the account.

In summary, the solution provided by the embodiments of the present invention can achieve various types of communication services in one communication client, which reduces the operation complexity when the user simultaneously uses various communication services, and improves user experience.

It needs to be noted that the steps shown in the flow charts of the drawings can be executed in a computer system such as a set of computer executable instructions. Although the logical order is shown in the flow charts, the steps shown or described here can be executed in a different order in some circumstances.

Apparently, those skilled in the art should understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A communication client, **characterized by** comprising a control module and multiple communication plug-ins, wherein each communication plug-in is configured to implement communication functionalities for a service type;
and said control module comprises:
a requesting module, configured to accept a user operation to generate a communication request corresponding to said operation, wherein said communication request comprises: a target contact and a selected communication service type;
a first determination module, configured to determine a communication plug-in which achieves said selected communication service type of communication in said multiple communication plug-ins; and
a calling module, configured to call said determined communication plug-in to initiate said selected communication service type of communication toward said target contact.

2. The communication client according to claim 1, **characterized in that** said control module further comprises:
an acquiring module, configured to control said multiple communication plug-ins to log into their own server to acquire contact information, wherein said contact information comprises: contact name and communication account;
a grouping module, configured to put the communication accounts with the same contact name into the same group; and
a first displaying module, configured to display the corresponding contact name of each group.

3. The communication client according to claim 2, **characterized in that** said requesting module comprises:
a first selecting module, configured to accept a user operation of selecting a target contact name in the contact names displayed by said first displaying module;
a second displaying module, configured to display a communication account in a group corresponding to said target contact name;
a second selecting module, configured to accept a user operation of selecting a target communication account in the communication accounts displayed by said second displaying module; and
a second determination module, configured to determine said selected communication service type to be a communication service type corresponding to said target communication account.

4. The communication client according to claim 3, **characterized in that**
said requesting module further comprises: an inquiring module, configured to determine each corresponding communication plug-in of each communication account in the group corresponding to said target contact name, and to inquire communication modes which can be initiated currently via said each communication plug-in;
said second displaying module is further configured to display said communication mode;
said second selecting module is further configured to accept a user to select a communication mode which needs to be initiated from said displayed communication mode; and
said calling module is configured to call said determined communication plug-in to initiate the communication process of said selected communication service type via said communication mode which needs to be initiated toward said target contact.

5. The communication client according to claim 4, **characterized in that** said inquiring module inquires communication modes which can be initiated currently via said each communication plug-in according to the online situation and/or the service capability of said each communication account.

6. The communication client according to claim 1, **characterized in that** said multiple communication plug-ins are achieved by a dynamic link library file.

7. The communication client according to claim 6, **characterized in that** said control module further comprises: a configuration file, configured to record information of said multiple communication plug-ins, wherein said information comprises at least one of the following: dynamic link library file path, achieved communication service type, and achieved service name.

8. The communication client according to claim 3, **characterized in that**
each communication plug-in of said multiple communication plug-ins is further configured to receive a communication request sent to said user, and to send a communication account of an initiator to a retrieval module; and
said control module further comprises:
said retrieval module, configured to retrieve the communication account of said initiator in said acquired contact information; and
a third displaying module, configured to display the contact name corresponding to the group where the communication account of said initiator is located in the situation that said retrieval module retrieves the communication account of said initiator, and to display the communication account of said initiator in the situation that said retrieval module does not retrieve the communication account of said initiator.

9. A method for initiating a communication service, **characterized by** comprising the following steps of:
a communication client accepting a user operation to generate a communication request corresponding to said operation, wherein said communication request comprises a target contact and a selected communication service type;
determining a communication plug-in which achieves the communication process of said selected communication service type in multiple communication plug-ins contained in the communication client; and
the communication client calling said determined communication plug-in to initiate the communication process of said selected communication service type toward said target contact.

10. The method according to claim 9, **characterized in that** before the communication client accepting a user operation to generate a communication request corresponding to said operation, the method further comprises:
the communication client controlling said multiple communication plug-ins to log into their own server to acquire contact information, wherein said contact information comprises contact name and communication account;
the communication client putting the communication accounts with the same contact name into the same group; and
the communication client displaying the contact names corresponding to each group.

11. The method according to claim 10, **characterized in that** the communication client accepting a user operation to generate a communication request corresponding to said operation comprises:
the communication client accepting a user operation of selecting a target contact name in the displayed contact names;
the communication client displaying a communication account in a group corresponding to said target contact name;
the communication client accepting a user operation of selecting a target communication account in the displayed communication accounts; and
the communication client determining that said selected communication service type is a communication service type corresponding to said target communication account.
